# EUROPEAN PATENT APPLICATION

(11) **EP 4 269 453 A1**
(43) Date of publication of application: **01.11.2023**
(21) Application number: 21911384.2
(22) Date of filing: 16.12.2021
(51) Int. Cl.: C08F 210/16, C08F 210/14, C08F 4/659, C08F 4/6592, C08F 4/02

(54) **HYBRID CATALYST COMPOSITION, CATALYST COMPRISING SAME, AND METHOD FOR PREPARING OLEFIN-BASED POLYMER USING SAME**

(30) Priority: 23.12.2020 KR 20200181750
(71) Applicant: Hanwha Solutions Corporation, Jung-gu Seoul 04541 (KR)
(72) Inventor: SEO, Junho, Daejeon 34128 (KR); JEONG, Tae Uk, Daejeon 34128 (KR); KIM, Sung Dong, Daejeon 34128 (KR); PARK, Hye Ran, Daejeon 34128 (KR); LIM, Seongjae, Daejeon 34128 (KR); JOUNG, Ui Gap, Daejeon 34128 (KR)
(74) Representative: Berggren Oy
(86) International application number: PCT/KR2021/019133
(87) International publication number: WO 2022/139317

(57) **Abstract**

The present invention relates to a hybrid catalyst composition comprising a heterogeneous transition metal compound, a catalyst for olefin polymerization comprising same, and a method for preparing an olefin-based polymer in which generation of a gel is suppressed using the catalyst. The method for preparing an olefin-based polymer according to an embodiment of the present invention can provide an olefin-based polymer in which non-uniformity of the olefin-based polymer, and in particular, generation of a gel is suppressed.

## Description

### BACKGROUND OF THE INVENTION

### FIELD OF THE INVENTION

The present disclosure relates to hybrid catalyst compositions, catalyst comprising the same, and methods of preparing olefin-based polymer using the same. More particularly, the present disclosure relates to a hybrid catalyst composition comprising a heterogeneous transition metal compound, a catalyst for olefin polymerization comprising the same, and a method for preparing an olefin-based polymer with inhibited gel formation using the catalyst.

### DESCRIPTION OF RELATED ART

Polyolefin-based polymers are used in a wide variety of realworld applications, including shopping bags, greenhouses, fishing nets, cigarette wrappers, instant noodle bags, yogurt bottles, battery cases, car bumpers, upholstery, shoe soles, and washing machines.

Traditionally, polyolefin-based polymers such as polyethylene, polypropylene, and ethylene-alpha-olefin copolymers and copolymers thereof have been prepared by heterogeneous catalysts such as Ziegler-Natta catalysts, which are composed of titanium compounds and alkyl aluminum compounds.

Recently, the preparation of polyolefins using metallocene catalysts, which are homogeneous catalysts with very high catalytic activity, has been studied. Metallocene catalysts are compounds in which ligands such as cyclopentadienyl, indenyl, and cycloheptadienyl are coordinationally bonded to transition metal or transition metal halogen compounds, and have a basic sandwich structure. They have various molecular structures depending on the type of ligand and the type of central metal.

Whereas other catalysts used to polymerize olefins, such as Ziegler-Natta catalysts, have non-uniform active site properties because the metal component, which is the active site, is dispersed on an inert solid surface, metallocene catalysts are known as single-site catalysts because they are one compound with a uniform structure, so all active sites have the same polymerization properties. Polymers polymerized with these metallocene catalysts are characterized by a narrow molecular weight distribution and a uniform distribution of comonomers.

Generally, metallocene catalysts are used in conjunction with a co-catalyst such as methyl aluminoxane because they are not active as polymerization catalysts by themselves. Under the action of the co-catalyst, the metallocene catalyst is activated with cations, and at the same time, the co-catalyst stabilizes the unsaturated cationic active species with anions that are not coordinated to the metallocene catalyst, forming a catalytic system that is active in the polymerization of various olefins.

Such metallocene catalysts are easy to copolymerize, and the stereostructure of the polymer can be adjusted according to the symmetry of the catalyst, and the polymer prepared therefrom has the advantages of narrow molecular weight distribution and uniform distribution of comonomers.

On the other hand, polymers prepared by metallocene catalysts have excellent mechanical strength but poor processability due to their narrow molecular weight distribution. To solve these problems, various methods have been proposed, such as changing the molecular structure of the polymer or broadening the molecular weight distribution. For example, U.S. Patent No. 5,272,236 improves the processability of polymers by using a catalyst that introduces long chain branches (LCBs) into the main chain of the polymer, but there is a problem of low activity in the case of a support catalyst.

To solve these problems of single metallocene catalysts and to develop catalysts with better activity and improved processability more easily, methods for hybridizing metallocene catalysts with different properties (heterogeneous metallocene catalysts) have been proposed. For example, U.S. Patent No. 4,935,474, U.S. Patent No. 6,828,394, U.S. Patent No. 6,894,128, Korean Patent No. 1437509, and U.S. Patent No. 6,841,631 disclose methods for producing polyolefins with bimodal molecular weight distributions using catalysts with different reactivity toward comonomers. Polyolefins with bimodal molecular weight distributions prepared in this manner have improved processability, but the different molecular weight distributions can result in uneven polyolefin resins. For example, the polyolefin may contain a large number of gels, or the product may have a poor appearance or rapid property changes due to processing.

Therefore, there is a need for a method to suppress the inhomogeneity of polyolefins when polymerizing olefin-based monomers using metallocene catalysts with heterogeneous transition metal compounds.

### SUMMARY OF THE INVENTION

An embodiment of the present disclosure is directed to providing a hybrid catalyst composition comprising a heterogeneous transition metal compound, a catalyst for olefin polymerization comprising the same, and a method of preparing an olefin-based polymer with suppressed non-uniformity, especially gel formation using the catalyst.

In one general aspect, a hybrid catalyst composition comprises:
a first transition metal compound of following Formula 1;
a second transition metal compound of following Formula 2; and
a third transition metal compound of following Formula 3,
wherein the molar ratio of the first transition metal compound and the second transition metal compound ranges from 1:100 to 100:1, and wherein the content of the third transition metal compound is 10 to 90 mol% based on the total number of moles of the hybrid catalyst composition: 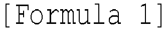 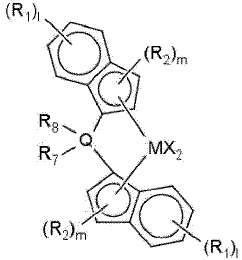 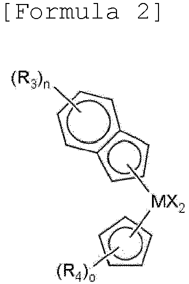 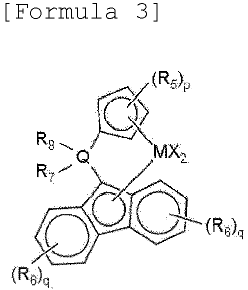 in Formulae 1 to 3,
l, n, p and q are each independently an integer from 0 to 4, each m is independently an integer from 0 to 2, and o is an integer from 0 to 5;
each M is independently titanium(Ti), zirconium(Zr), or hafnium(Hf) ;
each X is each independently halogen, nitro, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido or C₆₋₂₀ arylamido;
each Q is independently carbon(C), silicon(Si), germanium(Ge) or tin(Sn);
R₁ to R₈ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C1-20 silyl, wherein each of R1 to R6 may be independently linked by an adjacent group to form a substituted or unsubstituted saturated or unsaturated C4-20 ring.

In one embodiment, the first transition metal compound, the second transition metal compound, and the third transition metal compound may be each a compound of following Formula 1-1, Formula 2-1, and Formula 3-1: 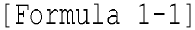 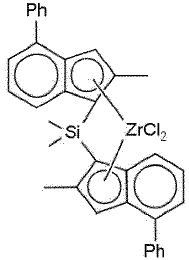 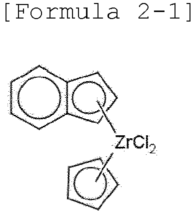 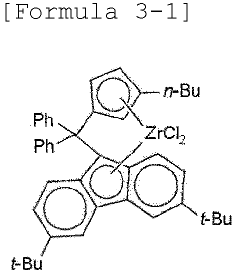 in Formulae 1-1 to 3-1,
Bu is a butyl group and Ph is a phenyl group.

In another general aspect, a catalyst for olefin polymerization comprises:
the hybrid catalyst composition according to one embodiment; and co-catalyst compound,
wherein the molar ratio of the first transition metal compound and the second transition metal compound ranges from 1:100 to 100:1, and wherein the content of the third transition metal compound is 10 to 90 mol% based on the total number of moles of the hybrid catalyst composition.

In one embodiment, the co-catalyst compound may comprise at least one selected from a compound of following Formula 4, a compound of following Formula 5, and a compound of following Formula 6:

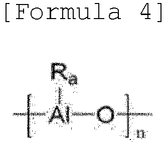

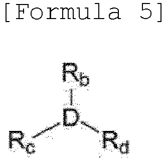

[Formula 6] [L-H]⁺[Z (A) ₄]⁻ or [L]⁺[Z (A) ₄]⁻

in Formula 4,
   n is an integer greater than or equal to 2, Rₐ is a halogen atom, a hydrocarbon group of carbon number 1 to 20, or a halogen-substituted hydrocarbon group of carbon number 1 to 20,
in Formula 5,
   D is aluminum (Al) or boron (B), and R_{b}, R_{c} and R_{d} are each independently a halogen atom, a hydrocarbon group of carbon number 1 to 20, a halogen-substituted hydrocarbon group of carbon number 1 to 20, or an alkoxy group of carbon number 1 to 20,
in Formula 6,
   L is a neutral or cationic Lewis base, [L-H]⁺ and [L]⁺ are Bronsted acids, Z is a 13-membered element, and each A is independently substituted or unsubstituted aryl group of carbon number 6 to 20, or substituted or unsubstituted alkyl group of carbon number 1 to 20.

In one embodiment, the compound of Formula 4 may be at least one selected from methylaluminoxane, ethylaluminoxane, isobutylaluminoxane, and butylaluminoxane.

In one embodiment, the compound of Formula 5 may be at least one selected from trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyl dimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, and tributylboron.

In one embodiment, the compound of Formula 6 may be at least one selected from triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenyl aluminum, N,N-diethylanilinium tetraphenyl aluminum, N,N-diethylanilinium tetrapentafluorophenyl aluminum, diethylammonium tetrapentafluorophenyl aluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, and triphenylcarbonium tetrapentafluorophenylboron.

In one embodiment, the catalyst may further comprise a support immersing(holding) the hybrid catalyst composition, the co-catalyst compound, or both.

In one embodiment, the support may comprise at least one selected from silica, alumina, and magnesia.

In one embodiment, the total amount of the hybrid catalyst composition immersed in the support may be 0.001 to 1 mmole based on 1 g of support, and the total amount of the co-catalyst compound immersed in the support is 2 to 15 mmole based on 1 g of support.

In another general aspect, a method for preparing olefin-based polymer comprising a step of polymerizing an olefin-based monomer in the presence of the catalyst for olefin polymerization is provided.

In one embodiment, the olefin-based monomer may be ethylene and the olefin-based comonomer may be at least one selected from propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Specifically, the olefin-based monomer may be ethylene and the olefin-based comonomer may be 1-hexene, and the olefin-based polymer may be a linear low density polyethylene.

In one embodiment, the polymerization of the olefin-based monomer may be performed by slurry polymerization, and more specifically, the polymerization of the olefin-based monomer may be performed in a slurry batch reactor.

In another general aspect, an olefin-based polymer prepared by the method for preparing olefin-based polymer which has a gel index of 1 or less when molded into a 50 um thick film is provided.

### DESCRIPTION OF THE INVENTION

Embodiments of the present disclosure are described in detail below.

### Hybrid Catalyst Composition

In one general aspect, a hybrid catalyst composition comprises:
a first transition metal compound of following Formula 1;
a second transition metal compound of following Formula 2; and
a third transition metal compound of following Formula 3,
wherein the molar ratio of the first transition metal compound and the second transition metal compound ranges from 1:100 to 100:1, and
wherein the content of the third transition metal compound is 10 to 90 mol% based on the total number of moles of the hybrid catalyst composition. 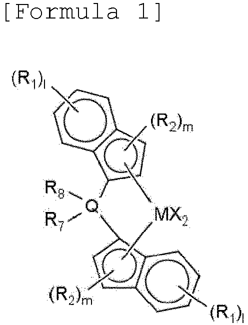 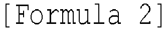 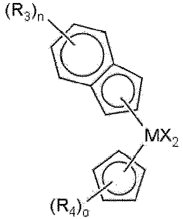 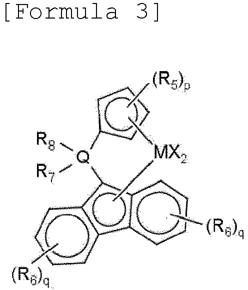 In Formulae 1 to 3,
l, n, p and q are each independently an integer from 0 to 4, each m is independently an integer from 0 to 2, and o is an integer from 0 to 5. Specifically, l, m, p and q may each be 1, n and o bay each be 0.
M is each independently titanium(Ti), zirconium(Zr), or hafnium(Hf). Specifically, M may each be zirconium.
X is each independently halogen, nitro, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido or C₆₋₂₀ arylamido. Specifically, X may each be halogen. More specifically, X may be chloride.
Q is independently carbon(C), silicon(Si), germanium(Ge) or tin(Sn). Specifically, Q may each be carbon or silicon.
R₁ to R₈ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C₁₋₂₀ silyl, wherein each of R₁ to R₆ may be independently linked by an adjacent group to form a substituted or unsubstituted saturated or unsaturated C₄₋₂₀ ring. Specifically, R₁ to R₈ may each be hydrogen, substituted or unsubstituted C₁₋₂₀ alkyl, or substituted or unsubstituted C₁₋₂₀ aryl.

In one embodiment, the first transition metal compound, the second transition metal compound, and the third transition metal compound may each be a compound of following Formula 1-1, Formula 2-1, and Formula 3-1: 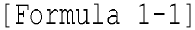 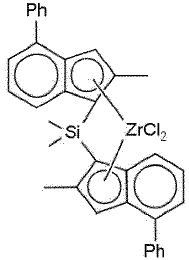 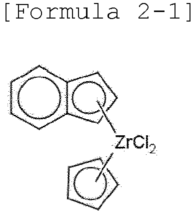 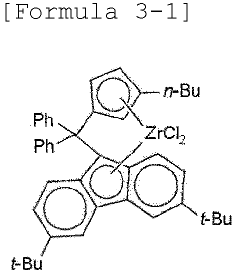 in Formulae 1-1 to 3-1,
Bu is a butyl group and Ph is a phenyl group.

In one embodiment, the molar ratio of the first transition metal compound and the second transition metal compound comprised in the hybrid catalyst composition according to one embodiment may range from 1:100 to 100:1. More specifically, it may be 1:50 to 50:1, and more specifically, it may be 1:10 to 10:1. When the molar ratio of the first transition metal compound to the second transition metal compound is in the above range, it may exhibit adequate support catalytic activity, which may be advantageous in terms of maintaining the activity of the catalyst and economy. Furthermore, an olefin-based polymer prepared in the presence of the catalyst for olefin polymerization satisfying the above range may exhibit excellent processability, and a film prepared therefrom may exhibit excellent mechanical and optical properties.

In one embodiment, the content of the third transition metal compound may be 10 to 90 mol% based on the total number of moles of the hybrid catalyst composition. Specifically, the content of the third transition metal compound may be 10 to 80 mol% or 10 to 60 mol%. When the content of the third transition metal compound in the hybrid catalyst composition is in the above range, the inhomogeneity of the olefin-based polymer prepared in the presence of this catalyst for olefin polymerization, in particular the generation of gels, may be suppressed.

### Catalysts for Olefin Polymerization

In another general aspect, a catalyst for olefin polymerization comprises:
a first transition metal compound of following Formula 1
a second transition metal compound of following Formula 2;
a third transition metal compound of following Formula 3; and
co-catalyst compound,
wherein the molar ratio of the first transition metal compound and the second transition metal compound ranges from 1:100 to 100:1, and
wherein the content of the third transition metal compound is 10 to 90 mol% based on the total number of moles of the hybrid catalyst composition.

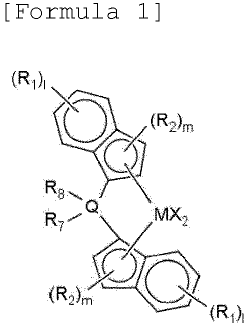

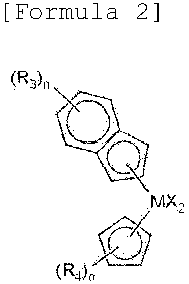

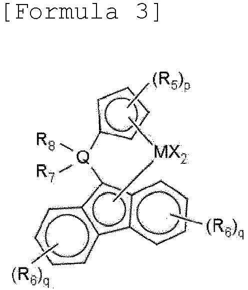

In formulas 1 to 3, l, m, n, o, p, q, M, X, Q, and R₁ to R₈ are as described in the hybrid catalyst composition above.

In one embodiment, the first transition metal compound, the second transition metal compound, and the third transition metal compound may be a compound represented by Formula 1-1 below, a compound represented by Formula 2-1, and a compound represented by Formula 3-1, respectively.

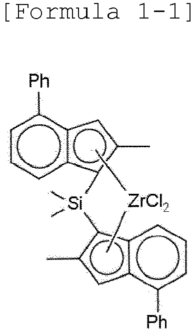

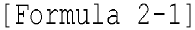

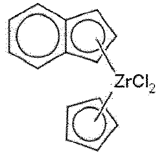

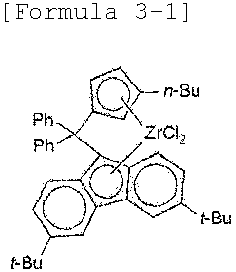

In Formulae 1-1 to 3-1, Bu is a butyl group and Ph is a phenyl group.

In one embodiment, the molar ratio of the first transition metal compound and the second transition metal compound comprised in the hybrid catalyst composition according to one embodiment may range from 1:100 to 100:1. More specifically, it may be 1:50 to 50:1, and more specifically, it may be 1:10 to 10:1. When the molar ratio of the first transition metal compound to the second transition metal compound is in the above range, it may exhibit adequate support catalytic activity, which may be advantageous in terms of maintaining the activity of the catalyst and economy. Furthermore, an olefin-based polymer prepared in the presence of the catalyst for olefin polymerization satisfying the above range may exhibit excellent processability, and a film prepared therefrom may exhibit excellent mechanical and optical properties.

In one embodiment, the content of the third transition metal compound may be 10 to 90 mol% based on the total number of moles of the hybrid catalyst composition. Specifically, the content of the third transition metal compound may be 10 to 80 mol% or 10 to 60 mol%. When the content of the third transition metal compound in the hybrid catalyst composition is in the above range, the inhomogeneity of the olefin-based polymer prepared in the presence of this catalyst for olefin polymerization, in particular the generation of gels, may be suppressed.

In one embodiment, the co-catalyst compound may comprise at least one selected from a compound of following Formula 4, a compound of following Formula 5, and a compound of following Formula 6.

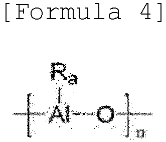

In Formula 4, n may be an integer greater than or equal to 2, and Rₐ may be a halogen atom, a hydrocarbon having a carbon number of 1 to 20, or a halogen-substituted hydrocarbon having a carbon number of 1 to 20. Specifically, Rₐ may be methyl, ethyl, n-butyl, or isobutyl.

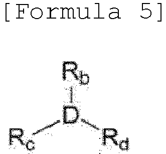

In Formula 5, D may be an aluminum(Al) or boron(B), and R_{b}, R_{c}, and R_{d} may each independently be a halogen atom, a hydrocarbon group of carbon number 1 to 20, a halogen-substituted hydrocarbon group of carbon number 1 to 20, or an alkoxy group of carbon number 1 to 20. Specifically, when D is aluminum (Al), R_{b}, R_{c}, and R_{d} may each independently be methyl or isobutyl, and when D is boron(B), R_{b}, R_{c}, and R_{d} may each be pentafluorophenyl.

[Formula 6] [L-H]⁺[Z(A)₄]⁻ or [L]⁺[Z(A)₄]⁻

In Formula 6, L may be a neutral or cationic Lewis base, [L-H]⁺ and [L]⁺ are Bronsted acids, Z may be a 13-membered element, and A may be an independently substituted or unsubstituted aryl group of carbon number 6 to 20 or substituted or unsubstituted alkyl group of carbon number 1 to 20. Specifically, [L-H]⁺ may be a dimethylanilinium cation, [Z(A)₄]⁻ may be [B(C₆F₅)₄]⁻, and [L]⁺ may be [(C₆H₅)₃C]⁺.

In one embodiment, the compound of Formula 4 may be, for example, methylaluminoxane, ethylaluminoxane, isobutylaluminoxane, or butylaluminoxane, preferably methylaluminoxane, but not limited to.

In one embodiment, the compound of Formula 5 may be, for example, trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyl dimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, or tributylboron, preferably trimethyl aluminum, triethyl aluminum, and triisobutyl aluminum, but not limited to.

In one embodiment, the compound of Formula 6 may be, for example, triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenyl aluminum, N,N-diethylanilinium tetraphenyl aluminum, N,N-diethylanilinium tetrapentafluorophenyl aluminum, diethylammonium tetrapentafluorophenyl aluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, or triphenylcarbonium tetrapentafluorophenylboron.

In one embodiment, the catalyst may further comprise a support immersing the hybrid catalyst composition. Specifically, the support may immerse both the transition metal compound and the co-catalyst compound.

In one embodiment, the support may comprise a material containing hydroxy groups on its surface, and more specifically, a material having highly reactive hydroxy and siloxane groups that have been dried to remove moisture from the surface. For example, support may comprise at least one selected from silica, alumina, and magnesia. Specifically, high temperature-dried silica, silicaalumina, or silica-magnesia may be used as support, which typically contain oxide, carbonate, sulfate, and nitrate components such as Na₂O, K₂CO₃, BaSO₄, and Mg(NO₃)₂. In addition, they may comprise carbon, zeolite, magnesium chloride, and the like. However, the supports are not specifically limited to these.

In one embodiment, an average particle size of the support may be 10 to 250 um, specifically, 10 to 150 um, more specifically, 20 to 100 um.

In one embodiment, a micropore volume of the support may be 0.1 to 10 cc/g, specifically, 0.5 to 5 cc/g, more specifically 1.0 to 3.0 cc/g.

In one embodiment, a specific surface area of the support may be 1 to 1,000 m²/g, specifically, 100 to 800 m²/g, more specifically, 200 to 600 m²/g.

In one embodiment, when the support is silica, the silica may have a drying temperature of 200 to 900 °C, specifically, 300 to 800 °C, more specifically, 400 to 700 °C. Drying temperatures below 200°C may cause too much moisture to react with the surface moisture and the co-catalyst compound, while temperatures above 900°C may cause the structure of the support to collapse.

In one embodiment, the concentration of hydroxy groups in the dried silica may be from 0.1 to 5 mmole/g, specifically from 0.7 to 4 mmole/g, more specifically from 1.0 to 2 mmole/g. Concentrations of hydroxy groups below 0.1 mmole/g may result in low carrying capacity of the co-catalyst compound, while concentrations above 5 mmole/g may result in deactivation of the catalytic component.

In one embodiment, the total amount of the hybrid catalyst composition immersed in the support may be 0.001 to 1 mmole based on 1 g of support. When the ratio of the hybrid catalyst composition to the support satisfies the above range, it exhibits adequate immersed catalytic activity, which is advantageous in terms of maintaining the activity of the catalyst and economy.

In one embodiment, the total amount of the co-catalyst compound in the support may be from 2 to 15 mmoles based on 1 g of support. When the ratio of catalyst compound to support satisfies the above range, it is advantageous in terms of maintaining the activity of the catalyst and economy.

In one embodiment, one, two or more supports may be used. For example, a single support may contain both the hybrid catalyst composition and the co-catalyst compound, or two or more supports may contain the hybrid catalyst composition and the co-catalyst compound, respectively. Alternatively, only one of the hybrid catalyst composition and the co-catalyst compound may be contained in a support.

### Preparation of Olefin-based Polymers

In another general aspect, a method of preparing an olefin-based polymer according to one embodiment comprised the step of polymerizing an olefin-based monomer in the presence of a catalyst for olefin polymerization according to one embodiment.

In one embodiment, the olefin-based polymer may be a homopolymer of olefin-based monomers or a copolymer of olefin-based monomers and comonomers.

In one embodiment, the olefin-based monomer may be at least one selected from C₂₋₂₀ alpha-olefin, C₁₋₂₀ diolefin, C₃₋₂₀ cycloolefin, and C₃₋₂₀ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, or 1-hexadecene, and the olefin-based polymer may be a homopolymer comprising only one of the olefin-based monomers exemplified above or a copolymer comprising two or more.

In one embodiment, the olefin-based polymer may be a copolymer of ethylene and C₃₋₂₀ alpha-olefin, preferably, a copolymer of ethylene and C₄₋₈ alpha-olefin, but not limited to.

In one embodiment, the content of ethylene may be 55 to 99.9 wt% or 90 to 99.9 wt%. In one embodiment, the content of the alpha-olefin-based comonomer may be 0.1 to 45 wt% or 10 to 40 wt%.

In one embodiment, the olefin-based polymer may be polymerized by polymerization reactions such as, but not limited to, free radical, cationic, coordination, condensation, addition, and the like.

In one embodiment, the olefin-based polymer may be prepared by gas phase polymerization, solution polymerization, or slurry polymerization. Specifically, the polymerization of the olefin monomer may be performed by slurry polymerization, and more specifically, the polymerization of the olefin-based monomer may be performed in a slurry batch reactor.

In one embodiment, if the olefin-based polymer is prepared by solution polymerization or slurry polymerization, examples of solvents that may be used comprise, but are not limited to, C₅₋₁₂ aliphatic hydrocarbon solvents such as pentane, hexane, heptane, nonane, decane and isomers thereof; aromatic hydrocarbon solvents such as toluene, benzene; hydrocarbon solvents substituted with chlorine atoms such as dichloromethane, chlorobenzene; and mixtures thereof.

In another general aspect, an olefin-based polymer prepared by the method of preparing the olefin-based polymer is provided. In one embodiment, the olefin-based polymer may have a gel index of 1 or less when molded into a 50 um thick film.

### Example

Hereinafter, one embodiment will be described in more detail by way of examples and comparative examples. However, the following embodiments are intended only to illustrate the present invention, and the scope of the present disclosure is not limited to them.

As transition metal compounds, compound 1-1 ((dimethylsilylene)bis(2-methyl-4-phenylindenyl)zirconium dichloride) is purchased from sPCI, compound 2-1 ((cyclopentadienyl)(indenyl)zirconium(IV) dichloride) and Compound 3-1 (diphenylmethylidene(n-butyl cyclopentadienyl)(2,7-tert-butyl fluoren-9-yl)zirconium dichloride) were purchased from MCN. Silica (XPO-2402) was purchased from Grace, and a 10% toluene solution of aluminoxane was purchased from Lake Materials. All materials were used as received without purification unless otherwise noted.

### Example 1

In a round glass reactor in a glove box, 26 mg of the transition metal compound of formula 1-1, 12 mg of the transition metal compound of formula 2-1, 3 mg of the transition metal compound of formula 3-1, and 8.8 g of a 10% toluene solution of aluminoxane were stirred for 1 hour. At this time, the molar ratio of compound 1-1:compound 2-1:compound 3-1 was 45:40:15.

After the reaction, the solution was added to 2 g of silica (XPO-2402), and an additional 1.5 liters of toluene was added and stirred at 75 °C for 3 hours. The solution was then washed three times with 10 mL of toluene and dried in vacuo for 1 hour to give 2.2 g of the powdered immersion catalyst.

### Example 2

2.17 g of the hybrid metallocene support catalyst was obtained by the same method as in Example 1, except that 17 mg of the transition metal compound of formula 1-1, 12 mg of the transition metal compound of formula 2-1, and 20 mg of the transition metal compound of formula 3-1 were used. At this time, the molar ratio of compound 1-1:compound 2-1:compound 3-1 was 30:40:30.

### Example 3

2.15 g of the hybrid metallocene support catalyst was obtained by the same method as in Example 1, except that 3 mg of the transition metal compound of formula 1-1, 12 mg of the transition metal compound of formula 2-1, and 36 mg of the transition metal compound of formula 3-1 were used. At this time, the molar ratio of compound 1-1:compound 2-1:compound 3-1 was 5:40:55.

### Example 4

The hybrid metallocene supported catalyst was prepared in the same manner as in Example 2, but the compounds used were increased. Specifically, 2.14 g of the transition metal compound of Formula 1-1, 1.56 g of the transition metal compound of Formula 2-1, and 2.47 g of the transition metal compound of Formula 3-1 were used, along with 250 g of silica and 1,103 g of a 10% toluene solution of aluminoxane. The amount of catalyst prepared was 345 g.

### Comparative Example 1

2.1 g of the hybrid metallocene support catalyst was obtained by the same method as in Example 1, except that 34 mg of the transition metal compound of formula 1-1 and 12 mg of the transition metal compound of formula 2-1 were used, and the transition metal compound of formula 3-1 was not used. At this time, the molar ratio of compound 1-1:compound 2-1:compound 3-1 was 60:40:0.

### Comparative Example 2

2.01 g of the hybrid metallocene support catalyst was obtained by the same method as in Example 1, except that 31 mg of the transition metal compound of formula 1-1, 12 mg of the transition metal compound of formula 2-1, and 3 mg of the transition metal compound of formula 3-1 were used. At this time, the molar ratio of compound 1-1:compound 2-1:compound 3-1 was 55:40:5.

### Experimental Examples

Using a slurry polymerization reactor, olefin-based polymers were prepared using the respective hybrid metallocene immersion catalysts prepared in Examples 1-4 and Comparative Examples 1-2. To the reactor, 50 mg of the hybrid metallocene supported catalyst and 1 liter of hexane were added, and 0.6 mL of 1 M triisobutyl aluminum (TiBAL) was added as a scavenger. The amount of 1-hexene shown in Table 1 below was added to the reactor.

During the polymerization reaction, the partial pressure of ethylene was maintained at 14 kgf/cm², and the amount of hydrogen gas shown in Table 1 below was added. The polymerization was carried out for 1 hour while maintaining the reaction temperature at about 80°C.

After drying the obtained olefin-based polymers at room temperature, the properties were measured by the following methods. The specific polymerization conditions and physical properties of the olefin-based polymers are shown in Tables 1 and 2 below.

### (1) Density

Measured in accordance with ASTM D1505.

### (2) Melt index and melt flow ratio(MFR)

According to ASTM D1238, the melt index was measured at 190°C with a load of 21.6 kg and a load of 2.16 kg, respectively, and the ratio (MI_{21.6}/MI_{2.16}) was obtained.

### (3) Molecular weight(Mw) and molecular weight distribution(PDI)

Measurements were made at 170 °C using 3D gel permeation chromatography-FTIR (GPC-FTIR).

### (4) Thermal Properties

Measurements were made using a differential scanning calorimeter (DSC, device name: DSC 2920, manufacturer: TA instrument). Specifically, the polymer was heated to 200°C and held at that temperature for 5 minutes, cooled to 20°C, and then heated again, with a temperature increase and decrease rate of 20°C/min.

### (5) Gel Properties

After forming a 50 um thick film using a small blown film extruder, the gel properties were measured against a reference film. A smaller gel index(GI) indicates less gel. Specifically, the gel index was measured by the following method.

Each of the resins polymerized in the Exemples and Comparative Examples was molded using a micro blown film extruder (Labtech) in an in-house micro blown film extruder. The film was formed by adjusting the extrusion speed and forming speed so that the film width was about 5 cm and the thickness was 50 um. The total number of gels in a 5 cm × 5 cm film was visually inspected and evaluated according to the following criteria.
1: 10 or fewer
2: More than 10 to less than 50
3: More than 50 to less than 100
4: More than 100 to less than 200
5: More than 200

**[Table 1]**

| | Hydrogen (cc/min) | Polymer s (g) | Catalyst Activity (gPE/gCathr) | MI_{2.16} (g/10 min) | MI_{21.6} (g/10 min) | MFR |
|---|---|---|---|---|---|---|
| Example 1-1 | 10 | 135 | 2,700 | 0.014 | 4.220 | 301.4 |
| Example 1-2 | 10 | 109 | 2,180 | 0.005 | 1.430 | 297.9 |
| Example 2 | 10 | 132 | 2,640 | 0.006 | 1.305 | 227.0 |
| Example 3 | 5 | 76 | 1,520 | 0.3 | 8.212 | 27.4 |
| Example 4 | 5 | 198 | 3,960 | 0.006 | 1.72 | 286. 7 |
| Compara tive Example 1-1 | 5 | 162 | 3,240 | 0.270 | 17.940 | 66.4 |
| Comparative Example 1-2 | 5 | 244 | 4, 880 | 0.012 | 0.366 | 30.5 |
| Compara tive Example 2 | 5 | 172 | 3,440 | 0.28 | 21.54 | 76.9 |

**[Table 2]**

| | Mn (g/mole ) | Mw (g/mole ) | MWD | Tm (°C) | Tc (°C) | Crysta llinit Y (%) | Densit y (g/cc) | GI |
|---|---|---|---|---|---|---|---|---|
| Example 1-1 | 25,300 | 210,335 | 8.31 | 133.2 | 119.7 | 70.6 | 0.9545 | 1 |
| Example 1-2 | 32,821 | 235,098 | 7.16 | 132.9 | 119.1 | 69.1 | 0.9525 | 1 |
| Example 2 | 27, 653 | 242,186 | 8.76 | 133.0 | 119.3 | 67.4 | 0.9500 | 1 |
| Example 3 | 42,455 | 156,272 | 3.68 | 133.4 | 117.9 | 72.5 | 0.947 | 1 |
| Example 4 | 36,285 | 252,162 | 6.95 | 134.0 | 118.9 | 68.9 | 0.9510 | 1 |
| Compara tive Example 1-1 | 19,900 | 181,989 | 9.15 | 133.9 | 118.9 | 72.7 | 0.9506 | 4 |
| Compara tive Example 1-2 | 29,490 | 176,943 | 6.00 | 134.5 | 118.7 | 71.4 | 0.9515 | 5 |
| Compara tive Example 2 | 23,330 | 218,844 | 9.38 | 133.6 | 117.5 | 73.1 | 0.9540 | 4 |

As can be seen from Tables 1 and 2, the olefin-based polymers prepared according to one embodiment had a good degree of gel development, but Comparative Example 1 without the third transition metal compound and Comparative Example 1 with a lower amount of the third transition metal compound had increased gel development and were not suitable for use in film or pipe applications.

## Claims

1. A hybrid catalyst composition comprising:
a first transition metal compound of following Formula 1;
a second transition metal compound of following Formula 2; and
a third transition metal compound of following Formula 3,
wherein the molar ratio of the first transition metal compound and the second transition metal compound ranges from 1:100 to 100:1, and
wherein the content of the third transition metal compound is 10 to 90 mol% based on the total number of moles of the hybrid catalyst composition: 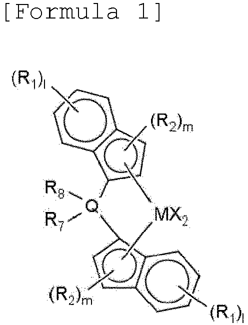 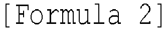 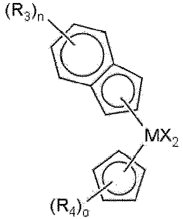 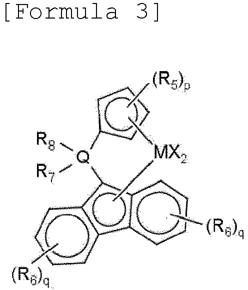 in Formulae 1 to 3,
l, n, p and q are each independently an integer from 0 to 4, each m is independently an integer from 0 to 2, and o is an integer from 0 to 5;
each M is each independently titanium(Ti), zirconium(Zr), or hafnium (Hf) ;
each X is each independently halogen, nitro, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido or C₆₋₂₀ arylamido;
each Q is each independently carbon(C), silicon(Si), germanium(Ge) or tin(Sn);
R₁ to R₈ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C₁₋₂₀ silyl, wherein each of R₁ to R₆ may be independently linked by an adjacent group to form a substituted or unsubstituted saturated or unsaturated C₄₋₂₀ ring.

2. The hybrid catalyst composition of claim 1, wherein the first transition metal compound, the second transition metal compound, and the third transition metal compound are each a compound of following Formula 1-1, Formula 2-1, and Formula 3-1: 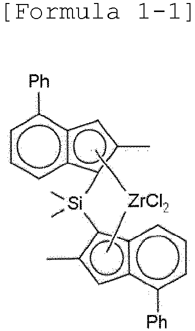 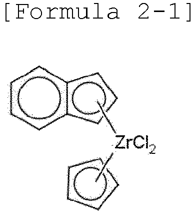 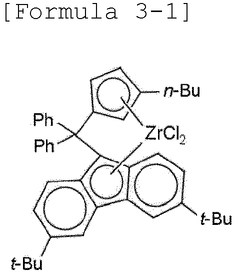 in Formulae 1-1 to 3-1,
Bu is a butyl group and Ph is a phenyl group.

3. A catalyst for olefin polymerization comprising:
the hybrid catalyst composition according to claim 1; and
co-catalyst compound,
wherein the molar ratio of the first transition metal compound and the second transition metal compound ranges from 1:100 to 100:1, and
wherein the content of the third transition metal compound is 10 to 90 mol% based on the total number of moles of the hybrid catalyst composition.

4. The catalyst for olefin polymerization of claim 3, wherein the co-catalyst compound comprises at least one selected from a compound of following Formula 4, a compound of following Formula 5, and a compound of following Formula 6: 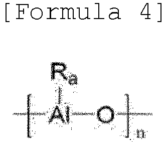 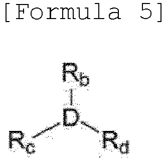
[Formula 6] [L-H]⁺[Z(A)₄]⁻ or [L]⁺[Z(A)₄]⁻
in Formula 4,
n is an integer greater than or equal to 2, Rₐ is a halogen atom, a hydrocarbon group of carbon number 1 to 20, or a halogen-substituted hydrocarbon group of carbon number 1 to 20,
in Formula 5,
D is aluminum (Al) or boron (B), and R_{b}, R_{c} and R_{d} are each independently a halogen atom, a hydrocarbon group of carbon number 1 to 20, a halogen-substituted hydrocarbon group of carbon number 1 to 20, or an alkoxy group of carbon number 1 to 20,
in Formula 6,
L is a neutral or cationic Lewis base, [L-H]⁺ and [L]⁺ are Bronsted acids, Z is a 13-membered element, and each A is independently substituted or unsubstituted aryl group of carbon number 6 to 20, or substituted or unsubstituted alkyl group of carbon number 1 to 20.

5. The method for preparing olefin-based polymer of claim 4, wherein the compound of Formula 4 is at least one selected from methylaluminoxane, ethylaluminoxane, isobutylaluminoxane, and butylaluminoxane.

6. The method for preparing olefin-based polymer of claim 4, wherein the compound of Formula 5 is at least one selected from trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyl dimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, and tributylboron.

7. The method for preparing olefin-based polymer of claim 4, wherein the compound of Formula 6 is at least one selected from triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenyl aluminum, N,N-diethylanilinium tetraphenyl aluminum, N,N-diethylanilinium tetrapentafluorophenyl aluminum, diethylammonium tetrapentafluorophenyl aluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, and triphenylcarbonium tetrapentafluorophenylboron.

8. The catalyst for olefin polymerization of claim 3, wherein the catalyst further comprises a support immersing the hybrid catalyst composition, the co-catalyst compound, or both.

9. The catalyst for olefin polymerization of claim 8, wherein the support comprises at least one selected from silica, alumina, and magnesia.

10. The catalyst for olefin polymerization of claim 8, wherein the total amount of the hybrid catalyst composition immersed in the support is 0.001 to 1 mmole based on 1 g of support, and the total amount of the co-catalyst compound immersed in the support is 2 to 15 mmole based on 1 g of support.

11. A method for preparing olefin-based polymer comprising a step of polymerizing an olefin-based monomer in the presence of the catalyst for olefin polymerization according to claim 3.

12. The method for preparing olefin-based polymer of claim 11, wherein the olefin-based polymer is a copolymer of an olefin-based monomer and an olefin-based comonomer.

13. The method for preparing olefin-based polymer of claim 12, wherein the olefin-based monomer is ethylene and the olefin-based comonomer is at least one selected from propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

14. The method for preparing olefin-based polymer of claim 13, wherein the olefin-based monomer is ethylene and the olefin-based comonomer is 1-hexene, and the olefin-based polymer is a linear low density polyethylene.

15. The method for preparing olefin-based polymer of claim 11, wherein the polymerization of the olefin-based monomer is performed by slurry polymerization.

16. An olefin-based polymer prepared by the method for preparing olefin-based polymer according to any one of claims 11 to 15, wherein the olefin-based polymer has a gel index of 1 or less when molded into a 50 um thick film.
